(19) Europäisches Patentamt
European Patent Office
Office européen des brevets

(11) EP 0 950 979 A1

(12) EUROPEAN PATENT APPLICATION

(43) Date of publication:
20.10.1999 Bulletin 1999/42

(51) Int. Cl.⁶: **G06K 11/18**, G01C 9/36

(21) Application number: 99105837.1

(22) Date of filing: 23.03.1999

(84) Designated Contracting States:
AT BE CH CY DE DK ES FI FR GB GR IE IT LI LU
MC NL PT SE
Designated Extension States:
AL LT LV MK RO SI

(30) Priority: 06.04.1998 US 55659

(71) Applicant:
UNIVERSAL ELECTRONICS, INC.
Cypress, California 90630-4841 (US)

(72) Inventors:
• Escobosa, Marcus
  Placentia, California 92870 (US)
• Chen, Fusheng Frank
  Anaheim, California 92804 (US)

(74) Representative:
Schuhmann, Albrecht
c/o Merten & Pfeffer Patentmanagement
Allersbergstr. 185 / G-3
90461 Nürnberg (DE)

(54) **Bubble chamber orientation sensor and control device**

(57) A bubble chamber orientation sensor and control device comprising a chamber having a conductive liquid therein which forms and traps an air bubble in the chamber. The liquid contacts segmented conductive electrode plates mounted on the interior surface of the chamber. As the chamber is tilted or moved the bubble, which is responsive to gravity effectively moves and occludes all or portions of two or more plates and changes the resistance between plates. The change is recognized to provide an output representative of the tilt.

Fig. 1

## Description

### BACKGROUND OF THE INVENTION

This invention relates to devices that sense and control the movement of cursors, pointers and other indicia and media on computer screens, both in application software and in games. Prior art sensing and control devices for such use include various forms of joystick, mouse and trackball devices and provide a simulated movement on the screen in response to a relative change in the position of parts on the device; for example, movement of a ball in a mouse or trackball housing.

The present invention relates also to switch devices that are sensitive to gravity. U.S. Patent No. 5,363,120 to Drumm discloses a computer input device using a orientation sensor. The Drumm patent discloses a hand-held device having a fixed light diffracting liquid and a phototransistor which senses the changing refraction angle as the device is tilted. When the hand-held device is rotated or tilted into varying orientations, selected switching is obtained. Suitable encoders generate input information for the associated microcontroller in response to said tilting. The information is processed and combined by suitable circuitry for communication to a computer, or to a control console. The signals are processed by software in the computer, and then used to provide input to other software programs. U.S. Patent No. 4,099,040 discloses a mercury type tilt switch including a globule of mercury that makes switching contact dependent on the orientation of the device.

### SUMMARY OF THE INVENTION

The invention pertains to control and sensing devices which provide outputs based upon the movement of a conductive liquid in a chamber which contacts two or more conductive electrode plates dependent on the gravitational orientation of the device. As the chamber is tilted or moved, the liquid makes selective electrical contact with the conductive plates to provide an output indicative of the orientation of the chamber.

The foregoing features and advantages of the present invention will be apparent from the following more particular description of the invention. The accompanying drawings, listed hereinbelow, are useful in explaining the invention.

### BRIEF DESCRIPTION OF THE DRAWINGS

Fig. 1 is a side view in cross-section of the inventive device to show the chamber and the conductive liquid;

Fig. 2 is a top view of the device of Fig. 1 to show separate conductive plates or plate segments;

Fig. 3 is a section view taken along the line 3-3 of Fig. 2;

Fig. 4 depicts the device of Fig. 1 in a tilted orientation relative to gravity;

Fig. 5 depicts the positioning of the bubble which provides intermediate position readings; and

Fig. 6 is a view of the invention associated with a screen display.

### DESCRIPTION OF THE INVENTION

The present invention relates to inexpensive, hand-held sensing and control devices. More particularly, the invention pertains to gravity sensitive devices that provide information based upon the response of conductive liquid switching elements. The inventive devices are used for cursor or pointer control, sensing and/or tracking on visual displays and are useful such as for interactive television and computer systems, control input to games and for visual tracking control in virtual reality systems. The software and electronic circuitry including the programming, encoders and decoders used in connection with the present invention are well-known in the art from many sources, including the above cited U.S. Patent No. 5,363,120.

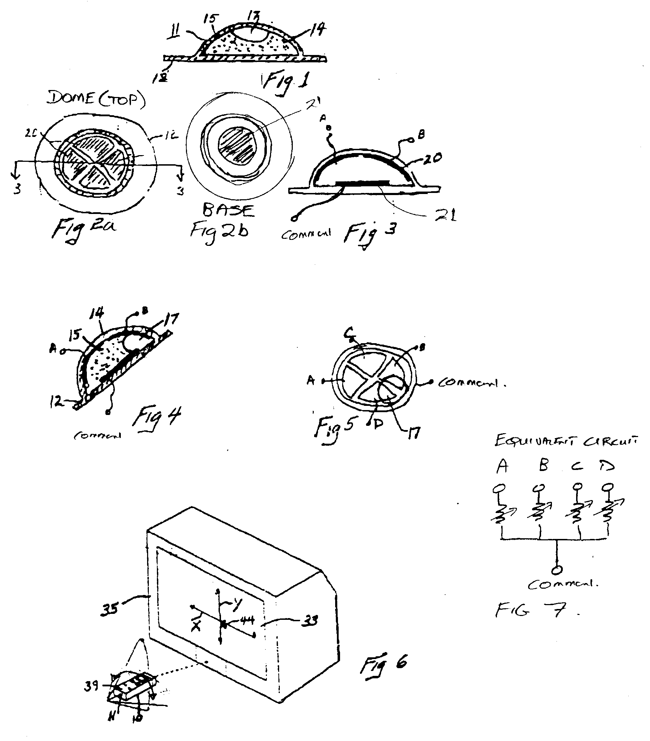

In the embodiment of the invention shown in Fig. 1, the inventive sensing and control device 11 is mounted in a hand-held housing 10 of any suitable known design (see also Fig. 6). A base 12 and a domed chamber 14 are mounted within the housing of device 11. Chamber 14 is filled with a moderately conductive liquid 15, of any suitable known type. The domed chamber 14 is filled with liquid 15 to a level to form an air bubble 17 in the chamber 14, that is, an air bubble 17 is trapped in the chamber 14 by the liquid 15.

Fig. 2a shows conductive plates or plate segments, generally labeled as 20, mounted on the interior surface of the chamber 14. Base 12 has a corresponding Common plate 21, as indicated in Figs. 2b and 3. Plates 20 have respective conductive terminals labeled A, B, C and D connected thereto. The plates 20 are separated into quadrants and are insulated (electrically unconnected) from each other. The Common plate 21 mounted to the base 12 is optimally approximately one half the diameter of the bottom of the dome. Fig. 4 shows the direction and tilt of the base 12 and chamber 14. Based on the tilt and the indicated position of bubble 17 shown in Figure 4, the resistance of terminals B and Common is greater than the resistance of terminals A and Common, that is:

$$R_{B, \text{Common}} > R_{A, \text{Common}}$$

This difference occurs because the bubble 17 (which has a higher resistance than the conductive liquid 15) occludes all or pan of segments of plate 20 that is connected to terminal B. An output is thus provided to enable the associated electronic circuitry and encoder 39, indicated in Fig. 6, to develop data signals in response to the orientation of device 11 for positioning a cursor or pointer 44, as known in the art, or controlling the movement of other indicia or media on a computer screen. The equivalent circuit for this arrangement of plate segments is shown in Fig. 7.

Fig. 4 shows the function of device 11 relative to a single axis. Fig. 5 depicts the general case wherein outputs are obtained for intermediate tilt positions to provide information as to the orientation of chamber 14 relative to both the X and Y axis, that is, intermediate position readings are obtained by sensing the resistance of combinations of plate segments 20 in the two axes. Fig. 5 indicates the segments of plates 20 in the Y (second) axis that connect to terminals C and Common and D and Common, and which are in a perpendicular relation to the drawing of Fig. 4. In Fig. 5, the position of the bubble 17, due to the tilt of chamber 14 as shown, occludes parts of the plate segments 20 that connect to terminal B as well as parts of the plate segments 20 that connect to terminal D. The resistive data is processed and the ratio calculations are combined to provide a resultant for both the X axis and the Y axis as follows:

$$x = f\,[R_{(B, \text{Common})}, R_{(A, \text{Common})}]$$

$$y = f\,[R_{(D, \text{Common})}, R_{(C, \text{Common})}]$$

where f [ ] is a linearizing function to give the system a good "feel" to the user.

The resultant data of the electrical resistance is processed by electronic circuitry and the encoders 39, as is known the art, to position the cursor or other indicia or media.

Fig. 6 depicts a system including a display screen 33 wherein the invention may be utilized.

While the invention has been particularly shown and described with reference to a particular embodiment thereof, it will be understood by those skilled in the art that various changes in form and detail may be made therein without departing from the spirit and scope of the invention.

**Claims**

1.    A device for sensing and controlling movement comprising:

    a) a casing;

    b) a moveable and tiltable chamber;

    c) a plurality of segmented conductive plates positioned in said chamber;

    d) an air bubble trapped by said liquid in said chamber, whereby said chamber when tilted causes said liquid to move within said chamber and thereby move said bubble to selectively occlude portions of said plates; and

    e) respective output terminals connected to said plates, whereby the resistance between respective terminals is dependent on the tilt of said chamber and which of said plates are occluded by said bubble.

2. A device as in Claim 1 further including electronic means to provide resistance ratios indicative of the orientation of said device.

3. A device as in Claim 1 further including means for converting said resistance between terminals to electronic signals and encoding said signals to cursor position parameters.

4. A device as in Claim 1 wherein said liquid is a mildly conductive liquid with a resistance less than that of air.

5. A device for providing position and movement input information comprising:

a) a portable hand-held housing;

b) a gravity sensitive device positioned in said housing, said device comprising a relatively flat base and a domed chamber positioned on said base;

c) a plurality of conductive plates segmented in quadrants positioned in said chamber;

d) a conductive liquid in said chamber for contacting said plates;

e) an air bubble formed between said liquid and the interior surface of said chamber, whereby said chamber when tilted causes said liquid to move within aid chamber and thereby move said bubble to selectively occlude plate segments; and

f) respective output terminals connected to said plates, whereby the resistance between said terminals is dependent on the tilt of said chamber and which of said plates are occluded by said bubble.

6. An apparatus as in Claim 5 wherein electronic means provide resistance ratios between of pairs of plates to provide an indication of the orientation of said device on both the X and Y axis.

Fig 1

DOME (TOP)

Fig 2a

BASE
Fig 2b

Common Fig 3

Fig 4

Common

Fig 5

EQUIVALENT CIRCUIT

A  B  C  D

Common

FIG 7.

Fig 6

**European Patent Office**

## EUROPEAN SEARCH REPORT

Application Number

EP 99 10 5837

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 721 308 A (TRIMBLE JAMES A) 26 January 1988 | 1-4 | G06K11/18 G01C9/36 |
| A | * column 7, line 65 - column 9, line 18; claim 17; figure 7 * | 5,6 | |
| | --- | | |
| X | PATENT ABSTRACTS OF JAPAN vol. 097, no. 007, 31 July 1997 & JP 09 061162 A  (ASAHI OPTICAL CO LTD), 7 March 1997 * abstract; figures 7,9 * | 1,2,4-6 | |
| | --- | | |
| X | DE 44 41 548 A (ASAHI KOGAKU KOGYO K.K.) 24 May 1995 * column 3, line 6 - line 22 * * column 5, line 7 - line 13; figures 1,6 * | 1,2,4-6 | |
| | --- | | |
| X | EP 0 164 316 A (MARELLI AUTRONICA S.P.A.) 11 December 1985 * page 8, line 12 - line 28 * * page 10, line 4 - line 10; claims 1,5,6,10; figures 5,8 * | 1,2,4-6 | |
| | | | TECHNICAL FIELDS SEARCHED (Int.Cl.6) |
| | --- | | G06K |
| A | US 4 862 172 A (ROSS J DAVID) 29 August 1989 * abstract; claims 1-3,12; figures 1,3 * | 1,3,5 | G01C |
| | ----- | | |

The present search report has been drawn up for all claims

| Place of search | Date of completion of the search | Examiner |
|---|---|---|
| BERLIN | 16 June 1999 | Durand, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 99 10 5837

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-1999

| Patent document cited in search report | | Publication date | Patent family member(s) | | Publication date |
|---|---|---|---|---|---|
| US 4721308 | A | 26-01-1988 | NONE | | |
| DE 4441548 | A | 24-05-1995 | JP | 7146142 A | 06-06-1995 |
| EP 0164316 | A | 11-12-1985 | AT | 70355 T | 15-12-1991 |
| | | | DE | 3584855 A | 23-01-1992 |
| | | | JP | 60249003 A | 09-12-1985 |
| | | | US | 4583296 A | 22-04-1986 |
| US 4862172 | A | 29-08-1989 | NONE | | |

EPO FORM P0459

For more details about this annex : see Official Journal of the European Patent Office, No. 12/82